# EUROPÄISCHE PATENTSCHRIFT

(11) **EP 3 236 201 B1**
(45) Veröffentlichungstag und Bekanntmachung des Hinweises auf die Patenterteilung: **09.02.2022**
(21) Anmeldenummer: 17166160.6
(22) Anmeldetag: 12.04.2017
(51) Int. Cl.: G01B 11/27, G01C 15/00

(54) **ROTATIONSLASER ZUR ERMITTLUNG DER RECHTWINKLIGKEIT ZWEIER MASCHINENTEILE**
ROTATING LASER FOR DETERMINING THE PERPENDICULARITY OF TWO MACHINE PARTS
LASER ROTATIF DESTINÉ À DÉTERMINER LA PERPENDICULARITÉ DE DEUX PARTIES DE MACHINE

(30) Priorität: 18.04.2016 DE 102016107099
(43) Veröffentlichungstag der Anmeldung: 25.10.2017
(73) Patentinhaber: Status Pro Maschinenmesstechnik GmbH, 44866 Bochum (DE)
(72) Erfinder: Foley, David, 44799 Bochum (DE); Knode, Burkhard, 45134 Essen (DE)
(74) Vertreter: Grundmann, Dirk

(56) Entgegenhaltungen:
- EP-A1- 2 626 722
- EP-A2- 0 729 053
- EP-A2- 1 016 850
- DE-A1- 4 341 578
- DE-A1-102008 035 480
- US-A- 5 894 123
- US-A1- 2003 136 901

## Beschreibung

### Gebiet der Technik

Die Erfindung betrifft einen Rotationslaser mit einer Lasereinrichtung zur Erzeugung eines von einer Steuereinrichtung mit einer Pulsfrequenz gepulsten Laserstrahls, der als Pulsfolge teilweise von einem um eine Rotationsachse rotierenden Umlenkorgan von einer Richtung parallel zur Rotationsachse als rotierender Laserstrahl in eine senkrecht zur Rotationsachse verlaufende Rotationsebene umgelenkt und teilweise als parallel zur Rotationsachse gerichteter axialer Laserstrahl austritt.

Die Erfindung betrifft darüber hinaus ein Verfahren zur Bestimmung der Rechtwinkligkeit eines Maschinenteiles oder der Bewegung eines Maschinenteiles gegenüber einer Bezugsebene unter Verwendung eines derartigen Rotationslasers.

### Stand der Technik

Rotationslaser sind aus der DE 43 41 578 A1 und der DE 10 2008 035480 A1 bekannt. Sie dienen der Vermessung der Relativlage verschiedener Maschinenteile zueinander.

Bei der Messung der Rechtwinkligkeit eines Maschinenteiles oder der Bewegung eines Maschinenteiles in Bezug auf eine Bezugsebene, beispielsweise die Verlagerungsrichtung einer Werkzeugspindel gegenüber einem Maschinentisch, wird ein Rotationslaser auf den Maschinentisch aufgestellt. In einem Abstand zum Rotationslaser werden mehrere Messempfänger aufgestellt, die in der Lage sind, den senkrechten Abstand eines auf das Messfeld des Messempfängers auftreffenden Lichtpunktes zur Bezugsebene zu ermitteln. Indem eine Laserstrahleinrichtung des Rotationslasers, die einen rotierenden Laserstrahl erzeugt, um einen Punkt kardanisch gelagert ist und mittels Stellmotoren verstellt werden kann, lässt sich die Rotationsebene des rotierenden Laserstrahls in eine Parallelebene zur Bezugsebene bringen, so dass die Rotationsachse senkrecht zur Bezugsachse steht. Ein axialer Laserstrahl verläuft optimal in der Rotationsachse, oftmals aber in einem gewissen Neigungswinkel dazu. Da der axiale Laserstrahl von demselben Laser erzeugt wird, der auch den rotierenden Laserstrahl erzeugt, erzeugt der axiale Laserstrahl eine in der Messebene eines Messempfängers rotierenden Lichtpunkt. Um die Empfindlichkeit der Messempfänger zu erhöhen wird der Laserstrahl als Pulsfolge erzeugt. Sowohl auf die in der Bezugsebene liegenden Messempfänger als auch auf den senkrecht zur Bezugsebene verlagerbaren Messempfänger zur Ermittlung der Lage des Maschinenteils trifft somit ein gepulster Laserstrahl. Es können Messfehler auftreten, wenn die Messempfänger so positioniert sind, dass sie nur selten von Pulsen getroffen werden.

Die EP 2 626 722 A1 beschreibt einen optoelektrischen Sensor in Form eines Rotationslasers. Ein in einer Rotationsebene umlaufender rotierender Laserstrahl soll von einem Objekt reflektiert werden. Anhand des Winkels des Laserstrahls und der Lichtlaufzeit soll die räumliche Position des Gegenstandes ermittelt werden. Zur Erhöhung der Störfestigkeit besteht der Laserstrahl aus einer pseudozufälligen Pulsfolge.

Die US 2003/0136901 A1 beschreibt einen Rotationslaser, bei dem die Rotationsachse mittels Stellgliedern in einer Position senkrecht zu einer Bezugsebene gebracht werden kann. Ferner ist ein Rotationslaser aus der EP 0729 053 A2 vorbekannt

### Zusammenfassung der Erfindung

Der Erfindung liegt die Aufgabe zugrunde, Maßnahmen vorzuschlagen, um den eingangs genannten Rotationslaser bzw. ein Verfahren zur Messung der Rechtwinkligkeit von Maschinenteilen oder zur Bestimmung der Bewegung eines Maschinenteiles gebrauchsvorteilhaft weiterzubilden.

Gelöst wird die Aufgabe durch die in den unabhängigen Ansprüchen angegebene Erfindung.

Zunächst und im Wesentlichen wird vorgeschlagen, dass die Steuereinrichtung den Laser derart ansteuert, dass er aufeinanderfolgende Pulsfolgen abgibt. Die Pulse der Pulsfolgen können eine Pulsfrequenz besitzen, die mehrere kHz, insbesondere 16 kHz beträgt. Die einzelnen Pulsfolgen haben eine zeitliche Pulsfolgenlänge, die geringer ist als eine Sekunde. Die aufeinanderfolgenden Pulsfolgen sind um eine Phasenwinkel phasenverschoben. Der Phasenwinkel kann dabei jeder Winkel innerhalb eines Vollkreises sein. Als Folge der mehrfach in einer Sekunde um einen Phasenwinkel verschobenen Pulsfolgen wird sichergestellt, dass die Messempfänger eine ausreichende Anzahl von Belichtungen mit dem Laserstrahl pro Zeit erhalten. Die Steuereinrichtung ist in der Lage, Stellmotoren zu betätigen, die die kardanisch innerhalb des Gehäuses des Rotationslasers angeordnete Laserstrahleinrichtung um einen Schwenkpunkt verschwenken zu können. Es können zusätzliche Nivellierungselemente vorgesehen sein, um den rotierenden Laserstrahl auch in eine Horizontalebene bringen zu können. Es ist insbesondere vorgesehen, dass die Steuereinrichtung die Lasereinrichtung kontinuierlich regelnd in einer Lage hält, in der die Rotationsebene parallel zur Bezugsebene verläuft. Hierzu stehen die Messempfänger mit der Steuereinrichtung in einer Datenübertragungsverbindung, beispielsweise über infrarotes Licht. Bei dem Verfahren zur Bestimmung der Rechtwinkligkeit eines Maschinenteils oder der Bewegung eines Maschinenteils gegenüber der Bezugsebene wird zunächst der Rotationslaser ortsfest zur Bezugsebene gebracht. Dies kann dadurch erfolgen, dass das Gehäuse des Rotationslasers mit einem Fuß auf die Bezugsebene aufgesetzt wird. Sodann werden mehrere, bevorzugt mindestens drei Messempfänger an voneinander verschiedenen Azimuthalpositionen in jeweils einem bevorzugt beliebigen Radialabstand bezogen auf die Rotationsachse auf die Bezugsebene aufgesetzt. Mittels der Messempfänger wird die Rotationsachse des rotierenden Laserstrahls solange über die Stellmotoren verkippt bis der Auftreffpunkt des Laserstrahls an jedem Messempfänger denselben Abstand zur Bezugsebene besitzt. Sodann wird mit einem weiteren Messempfänger der radiale Abstand des Maschinenteils in verschiedenen axialen Abständen zur Bezugsebene bestimmt. Hierzu wird der Messempfänger beispielsweise entlang eines Maschinenteils oder zusammen mit einem Maschinenteil verlagert. Die Verlagerungsrichtung dieses Messempfängers kann von der Rotationsachse, die senkrecht zur Bezugsebene verläuft, abweichen. Diese Abweichungen werden mittels des Messempfängers ermittelt. Es handelt sich dabei um Abweichungen in einer Richtung in einer Parallelebene zur Horizontalebene. Bei der Messung erzeugt der Laser der Laserstrahleinrichtung die oben genannten Pulsfolgen, beispielsweise in einer Pulsfrequenz von mehreren Kilohertz. Diese Pulsfolgen treffen unmittelbar aufeinanderfolgend auf das Messfeld des in axialer Richtung verlagerbaren Messempfängers, so dass die dortige Auswerteelektronik zwischen Dunkel- und Hellphasen unterscheiden kann. Mittels dieses Messempfängers lässt sich somit die Position eines Laserstrahlpunktes auf der Messfläche ermitteln und damit dessen räumliche Lage bezogen auf den Messempfänger. Liegt die Richtung des axialen Laserstrahls nicht exakt in der Rotationsachse, so erzeugt die Rotationsbewegung des Umlenkorgans, bei dem es sich um ein rotierendes Pentaprisma handeln kann, Lichtpunkte, die auf einer Kreis- oder Ellipsenbahn über das Messfeld des Messempfängers wandern. Der Messempfänger bzw. seine Auswerteelektronik ist in der Lage, den Flächenmittelpunkt dieser Ellipsen- oder Kreisbahn zu ermitteln, die der Lage der Rotationsachse entspricht. Da der axiale Laserstrahl und der rotierende Laserstrahl aus demselben Laserstrahl ausgekoppelt werden, ist auch der rotierende Laserstrahl gepulst. Während des Umlaufs des rotierenden Laserstrahls werden somit Winkelbereiche mit einer Dunkelphase und Winkelbereiche mit einer Hellphase erzeugt. Um zu vermeiden, dass die Messfelder der auf der Bezugsebene angeordneten Messempfänger über eine unzulässige Zeit dauerhaft in einer Dunkelphase liegen, in der die Messempfänger kein Positionssignal an die Steuereinrichtung senden können, welches erforderlich ist, um die Rotationsebene parallel zur Bezugsebene zu halten, wird erfindungsgemäß die Pulsfolge von der Steuereinrichtung in vorgegebenen Zeiten jeweils um eine Phasenwinkel verschoben, wobei die vorgegebenen Zeiten weniger als eine Sekunde entsprechen, so dass die Pulsfolgen mehrfach in einer Sekunde jeweils um voneinander verschiedene Phasenwinkel, die zwischen 0 π und 2 π liegen, phasenverschoben wird. Dies erfolgt bevorzugt über einen Zufallsgenerator, der den jeweiligen Betrag der Phasenverschiebung vorgibt. Auf diese Weise wird sichergestellt, dass die Messfelder jeder Messempfänger zumindest einmal, bevorzugt aber mehrfach in der Sekunde von dem rotierenden Laserstrahl getroffen werden. Die Steuereinrichtung ist somit in ausreichender Weise in die Lage versetzt, durch eine permanente Regelung die Lasereinrichtung in einer Position zu halten, in der der rotierende Laserstrahl in einer Parallelebene zur Bezugsebene rotiert, so dass die Rotationsachse exakt senkrecht zur Bezugsebene steht. Durch ein Entlangfahren des vertikal beweglichen Messempfängers am Maschinenteil oder durch eine Vertikalbewegung des Maschinenteils kann somit die Rechtwinkligkeit des Maschinenteils bzw. der Bewegung zur Bezugsebene ermittelt werden bzw. die Abweichungen von der Rechtwinkligkeit.

### Kurze Beschreibung der Zeichnungen

Nachfolgend wird die Erfindung anhand beigefügter Zeichnungen erläutert. Es zeigen:
- Fig. 1: als erstes Anwendungsbeispiel schematisch in einer perspektivischen Darstellung die Anordnung dreier Messempfänger 20, 20', 20" auf einer Bezugsebene 48 und einen zwischen den Messempfängern angeordneten Rotationslaser 1 zur Messung der Richtung einer Bewegung eines Maschinenteiles 26,
- Fig. 2: den Schnitt gemäß der Linie II - II in Figur 1 durch einen am Maschinenteil 26 befestigten Messempfänger 120,
- Fig. 3: ein zweites Anwendungsbeispiel jedoch in einer horizontalen Ansicht auf ein Maschinenteil 25, dessen Rechtwinkligkeit zur Bezugsebene 48 ermittelt werden soll,
- Fig. 4: schematisch die unmittelbar aufeinanderfolgenden Pulsfolgen P₁, P₂, P₃, P₄, die jeweils um einen Phasenwinkel ϕ₁, ϕ₂, ϕ₃, ϕ₄ gegenüber einem willkürlich gewählten Phasennullpunkt phasenverschoben sind,
- Fig. 5: schematisch einen Querschnitt durch das Gehäuse 1 eines Rotationslasers und einen beabstandet vom Gehäuse 1 angeordneten Messempfänger 20, wobei die Papierebene die x/z-Ebene eines rechtwinkligen Koordinatensystems darstellt;
- Fig. 6: schematisch den Schnitt gemäß der Linie VI - VI in Figur 5 in der x/y-Ebene; und
- Fig. 7: schematisch den Schnitt gemäß der Linie VII - VII in Figur 5 in der x/y-Ebene.

### Beschreibung der Ausführungsformen

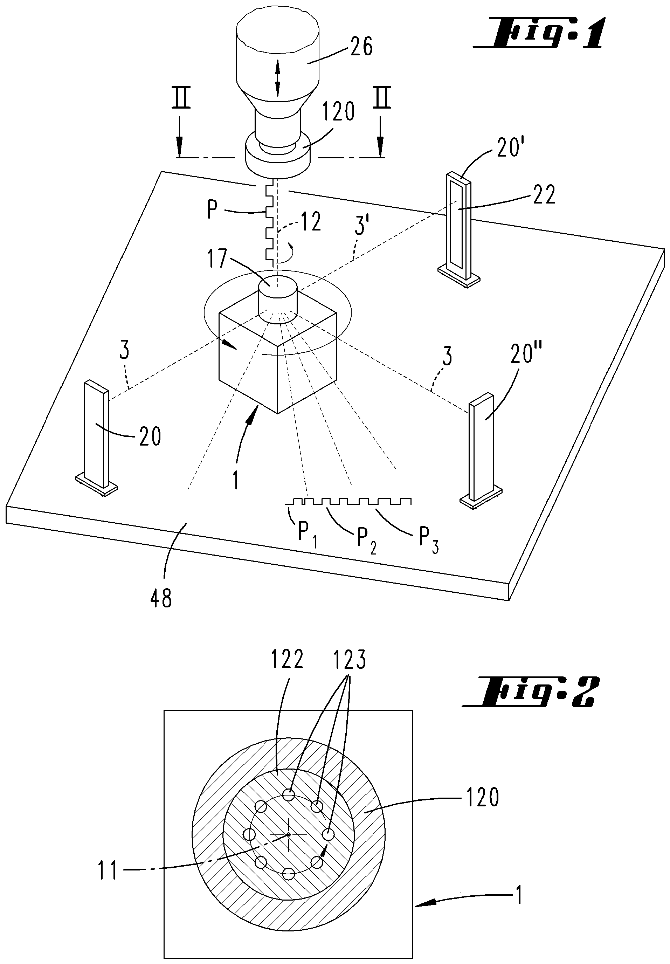

Die Figur 1 zeigt ein erstes Verwendungsbeispiel eines Rotationslasers 1 in Kombination mit mehreren Messempfängern 20, 20', 20".

Eine Maschine besitzt einen Maschinentisch, der eine Bezugsebene 48 definiert. Relativ gegenüber diesem Tisch, also der Bezugsebene 48 kann ein Maschinenteil 26 in einer Richtung senkrecht zur Bezugsebene 48 verfahren werden. Bei dem Maschinenteil 26 kann es sich um die Spindel einer Werkzeugmaschine handeln, beispielsweise eine Werkzeugspindel, mit der ein Fräser angetrieben werden kann, mit dem Werkstücke, die auf dem Maschinentisch befestigt sind, bearbeitet werden können. Im Futter des Maschinenteiles 26 befindet sich ein Messempfänger 120, der in der Figur 2 in der Draufsicht auf das Messfeld 22 dargestellt ist.

Ein Kopf des Rotationslasers 1 bildet ein Umlenkorgan 17 aus, mit dem ein von einer Laserstrahleinrichtung erzeugter Laserstrahl 16 geteilt und umgelenkt wird. Der innerhalb des Rotationslasers 1 erzeugte Laserstrahl 16, wird vom Umlenkorgan 17, welches ein Pentaprisma aufweisen kann, in eine Richtung quer zur Rotationsachse 11 des Umlenkorganes 17 umgelenkt. Es wird ein um die Rotationsachse 11 in einer Rotationsebene 3' rotierender Laserstrahl 3 erzeugt. Ein anderer Teil des Laserstrahls 16 tritt im Wesentlichen ohne Umlenkung in axialer Richtung aus dem Kopf 17 aus. Er verläuft bevorzugt exakt innerhalb der Rotationsachse 11. Toleranzbedingt kann der axiale Laserstrahl 12 einen geringfügigen radialen Versatz zur Rotationsachse 11 von wenigen Mikrometern besitzen, so dass der Laserstrahl 12 auf einer Kreisbahn um die Rotationsachse 11 auf dem Messfeld 122 umläuft.

Der rotierende Laserstrahl 3 läuft über die Messfelder 22 der Messempfänger 20, 20', 20".

Die Messempfänger 20, 20', 20" sind derart in der Bezugsebene 48 angeordnet, dass sie auf den Eckpunkten eines Dreiecks, bevorzugt auf den Eckpunkten eines gleichschenkligen Dreiecks liegen und der Rotationslaser 1 innerhalb dieses Dreiecks liegt.

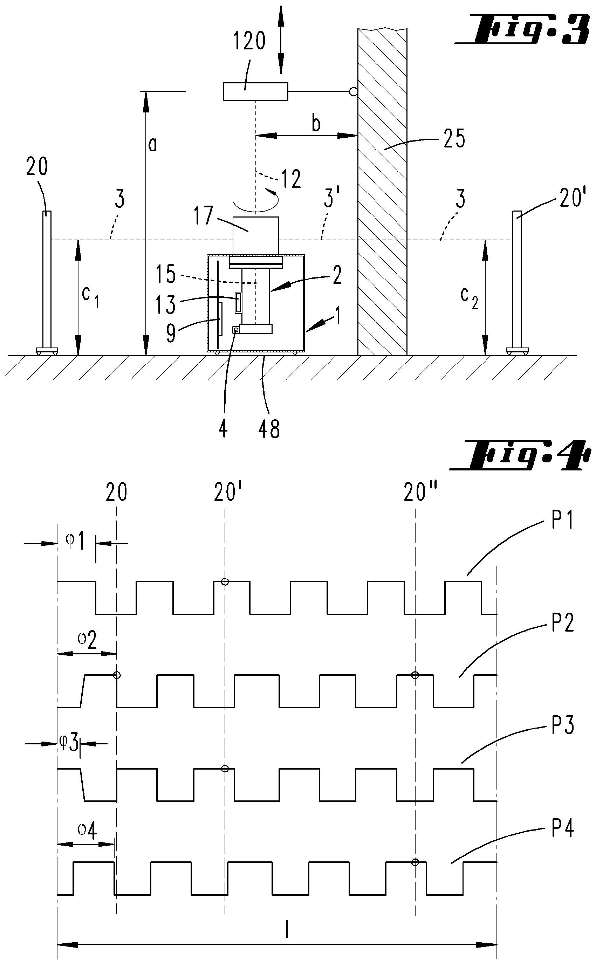

Das in Figur 3 dargestellte Ausführungsbeispiel entspricht im Wesentlichen dem in den Figuren 1 und 2 dargestellten Ausführungsbeispiel, wobei hier jedoch die Rechtwinkligkeit eines Maschinenteils 25 gegenüber der Bezugsebene 48 ermittelt werden soll. Hierzu wird ein Messempfänger 120 in eine Richtung quer zur Bezugsebene 48 verlagert. Der Messempfänger 120 wird entlang des Maschinenteiles 25 geführt, um zu einer Vielzahl von axialen Abständen a zur Bezugsebene 48 jeweils den radialen Abstand b des Maschinenteiles 25 zum axialen Laserstrahl 12 bzw. zur Rotationsachse 11 zu messen.

Eine Steuereinrichtung 9 des Rotationslasers 1 ist in der Lage, von den Messempfängern 20, 20', 20" Werte zu empfangen, die den Vertikalpositionen c₁, c₂ entsprechen, an denen der rotierende Laserstrahl 3 das Messfeld 22 des jeweiligen Messempfängers 20, 20', 20" trifft. Es handelt sich dabei um die bezogen auf die Rotationsachse 11 axialen Abstände der Auftreffpunkte des Laserstrahl 3 auf den Messfeldern 22 von der Bezugsebene 48.

Mittels Stellmotoren 6, 7 kann die innerhalb des Gehäuses des Rotationslasers 1 kardanisch aufgehängte Laserstrahleinrichtung 2 in eine derartige Position gebracht werden, dass die Rotationsebene des rotierenden Laserstrahls 3 parallel zur Bezugsebene 48 verläuft. Hierzu wird die Laserstrahleinrichtung 2 und das Umlenkorgan 17, das fest aber drehbar mit der Laserstrahleinrichtung 2 verbunden ist, geringfügig in seiner Neigungsstellung verändert.

Die Messung der Rechtwinkligkeit beginnt mit dieser Ausrichtung der Rotationsebene 3' in eine Parallelebene zur Bezugsebene 48, so dass die Rotationsachse 11 senkrecht zur Bezugsebene 48 verläuft. Sodann erfolgt die Messung der Rechtwinkligkeit des Maschinenteiles 25 bzw. 26 durch eine Vertikalverlagerung des Messempfängers 120 in Richtung der Doppelpfeile in den Figuren 1 und 3.

Die Steuereinrichtung 9 steuert den Laser der Lasereinrichtung 2 an, so dass dieser die in der Figur 4 dargestellten Pulsfolgen P₁, P₂, P₃, P₄ unmittelbar aufeinanderfolgend abgibt. Dies hat zur Folge, dass sowohl der rotierende Laserstrahl 3 als auch der axiale Laserstrahl 12 gepulst sind.

Die in der Figur 4 dargestellten Pulsfolgen P₁ bis P₄ besitzen dieselbe Pulsfrequenz von beispielsweise 16 kHz. Die Umlauffrequenz des rotierenden Laserstrahls 3 liegt im einstelligen Hertz-Bereich, kann aber auch größer sein. Die Umlauffrequenz und die Pulsfrequenz sind nicht miteinander gekoppelt, so dass es Situationen geben kann, in denen die Pulsfrequenz ein ganzzahliges Vielfaches der Umlauffrequenz ist, bzw. dass keine an einer festen Azimuthalposition bezogen auf die Rotationsachse 11 "drehende" sondern "stehende" Pulse erzeugt werden. Durch die in der Figur 4 dargestellten phasenverschobenen Pulsfolgen wird erreicht, dass es zu keinen dauerhaft "stehenden" Pulslücken kommt. Dies hat zur Folge, dass die Messempfänger 20, 20', 20" an x-beliebigen Stellen um den Rotationslaser 1 herum angeordnet werden können, da aufgrund der Phasenverschiebungen ϕ₁ bis ϕ₄ stehende Pulslücken vermieden sind.

In der Figur 4 sind die Positionen der Messempfänger 20, 20', 20" als gestrichelte Linien dargestellt. In der Pulsfolge P₁, die um den Phasenwinkel ϕ₁ gegenüber einem willkürlichen Phasennullpunkt versetzt ist, liegt der Messempfänger 20 und der Messempfänger 20" in einer Pulslücke, wohingegen der Messempfänger 20' von einem Puls getroffen wird.

Die Pulsfolge P₂, die sich unmittelbar an die Pulsfolge P1 anschließt, jedoch mit einem anderen Phasenwinkel ϕ₂ gegenüber dem Phasennullpunkt phasenverschoben ist, liegt der Messempfänger 20' in einer Pulslücke, wohingegen die Messempfänger 20, 20" einen Puls empfangen können.

Während der Pulsfolge P₃, die um den Phasenwinkel ϕ₃ gegenüber dem Phasennullpunkt phasenverschoben ist, empfängt nur der Messempfänger 20' Licht.

Während der Pulsfolge P₄, die um den Phasenwinkel ϕ₄ gegenüber dem Phasennullpunkt phasenverschoben ist, empfängt nur der Messempfänger 20" Licht.

Die Phasenverschiebungswinkel ϕ₁ bis ϕ₄ der aufeinanderfolgenden Pulsfolgen P₁ bis P₄, die jeweils die gleiche Pulsfolgenlänge L besitzen, kann zufällig erzeugt werden. Beispielsweise erfolgt dies mit von der Steuereinrichtung 9 erzeugten (Pseudo-)Zufallszahlen.

Die Pulsfolgenlänge L beträgt weniger als eine Sekunde. Sie liegt bevorzugt etwa im Bereich zwischen einer halben Sekunden und einer zwanzigstel Sekunde, so dass die Pulsfrequenz mindestens 10 mal, bevorzugt mindestens 50 mal oder 100 mal so groß ist wie die Phasenlagenänderungsfrequenz.

Auf dem Messfeld 122 wandert ein pulsierender Lichtpunkt 123 auf einer Kreisbahn bzw. Ellipsenbahn um die Rotationsachse 11, wobei der Radius im Mikrometerbereich liegen kann. Eine Auswerteeinrichtung des Messempfängers 20 ist in der Lage, den Flächenmittelpunkt dieser Kreisbahn bzw. Ellipsenbahn zu bestimmen.

Durch das Pulsieren des Laserstrahls wird die Empfindlichkeit des Messempfängers 120 erhöht, da dort jeder Puls und jede Pulslücke empfangen wird. Über eine Synchronisation mit der Steuereinrichtung 9 lassen sich die auf dem Messfeld 122 erzeugten Hell-Dunkelunterschiede während der Pulse ermitteln und damit die Position des Lichtpunktes 123 in der Fläche des Messfeldes 122. Hieraus lässt sich die Position des Messempfängers 120 in Horizontalrichtung bezogen auf die Rotationsachse 11 ermitteln. Dieser Wert bildet die Basis zur Bestimmung des Abstandes b in Figur 3 bzw. der Lage des Maschinenteiles 26 in einer Parallelebene zur Bezugsebene 48 relativ zur Rotationsachse 11.

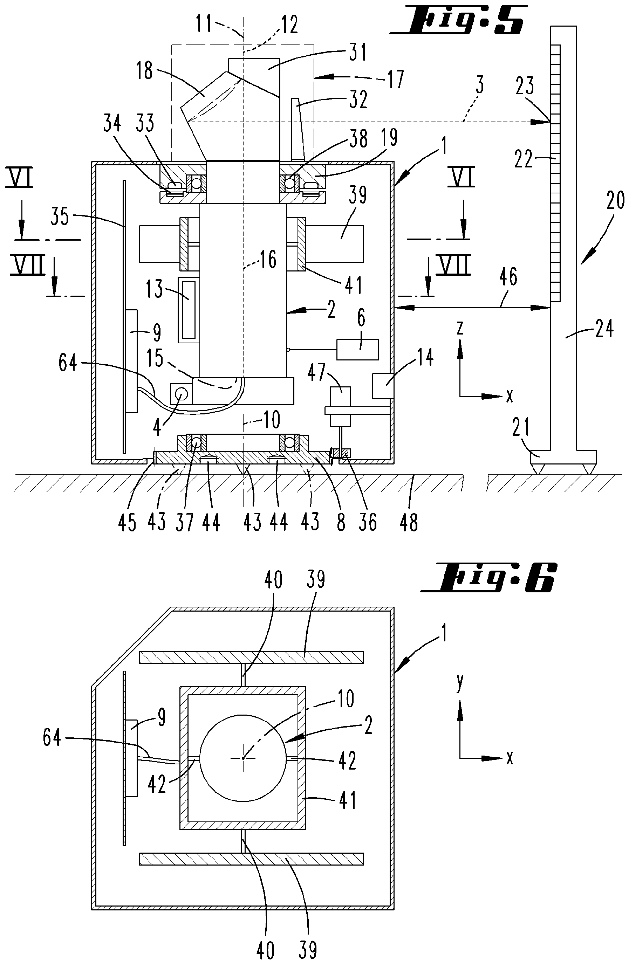

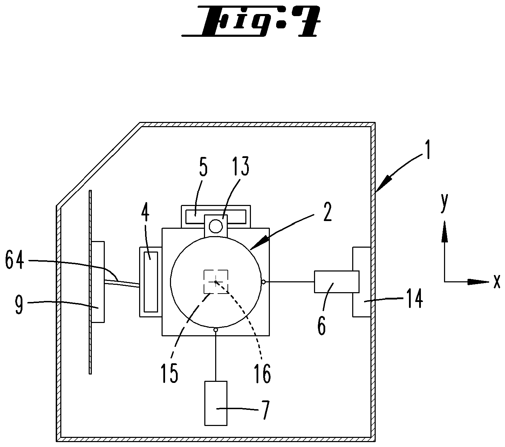

Ein Ausführungsbeispiel eines Rotationslasers 1 wird nachfolgend anhand der Figuren 5 bis 7 erläutert:

Der in den Figuren 5 bis 7 schematisch dargestellte Rotationslaser besitzt ein Gehäuse 1, welches eine Unterseite und eine Oberseite sowie vier Vertikalseiten aufweist, wenn das Gehäuse 1 mittels Aufstellpunkten 43 auf eine Horizontalfläche 48 aufgestellt ist. Die Bodenfläche besitzt einen Fuß 8, der einen Befestigungsabschnitt ausbildet, mit dem die Bodenfläche auch an einer Vertikalfläche befestigbar ist. Hierzu können Befestigungsmittel, beispielsweise Innengewinde 44, vorgesehen sein, mit denen der Fuß 8 bzw. der Befestigungsabschnitt an einem Stativ befestigt werden kann.

Der Befestigungsabschnitt 8 bildet eine runde Drehscheibe aus, die über ein Drehlager 37 mit dem Gehäuse 1 verbunden ist. Bei dem Drehlager 37 kann es sich um ein Kugellager handeln, das eine Drehachse 10 aufweist, die in der stehenden Stellung des Rotationslasers im Wesentlichen eine Vertikalachse 1 ist. Der Befestigungsabschnitt 8 kann eine Umfangsverzahnung 45 aufweisen, in die die Zähne eines Zahnrades 36 eingreifen, das von einem Drehantrieb 47 drehangetrieben wird. Der Drehantrieb 47 ist bevorzugt ein Schrittmotor, so dass das Gehäuse 1 um die Drehachse 10 in frei wählbare Winkelstellung gedreht werden kann, wobei der Befestigungsabschnitt 8 fest mit dem Untergrund, beispielsweise der Horizontalfläche 48 oder einem Stativ, verbunden bleibt.

Innerhalb des Gehäuses 1 befindet sich eine kardanische Aufhängung für eine Laserstrahleinrichtung 2. Eine gehäusefeste Kardanaufhängung 39 lagert einen Kardanringkörper 41, der um eine Gelenkachse 40 verschwenkbar ist. In einem dreiachsigen Koordinatensystem, bei dem die Z-Achse eine Vertikalachse darstellt, die im Wesentlichen parallel zur Drehachse 10 verläuft, erstreckt sich die Gelenkachse 40 in der in einer Horizontalebene verlaufenden y-Richtung. Der Kardanringkörper 41 kann mittels eines Stellmotors 6 um die Y-Achse verschwenkt werden, um die Neigungslage einer Mittelachse 11 der Laserstrahleinrichtung 2 zu verstellen.

Die Laserstrahleinrichtung 2 ist über sich in der horizontalen X-Richtung erstreckende Gelenkachsen 42 mit dem Kardanringkörper 41 verbunden. Ein weiterer Stellantrieb 7 ist in der Lage, die Laserstrahleinrichtung 2 um die X-Achse zu verschwenken. Die kardanischen Aufhängungen 39 bis 42 bilden somit einen Gelenkpunkt aus, um den die Neigungslage der Laserstrahleinrichtung 2 bzw. deren Achse 11 derart auszurichten, dass sie senkrecht auf einer Horizontalebene steht.

Die Laserstrahleinrichtung 2 trägt ein Drehlager 38, über welches ein Kopf 17 drehbar, aber axial und neigungsfest mit der Laserstrahleinrichtung 2 verbunden ist. Die Achse der Laserstrahleinrichtung 2 entspricht dabei der Rotationsachse 11, um die der Kopf 17 gegenüber der Laserstrahleinrichtung 2 rotieren kann. Es ist ein Rotationsantrieb 19 vorgesehen, der beispielsweise Magnete 33 und Spulen 34 aufweisen kann, um den Kopf 17 derart um die Laserstrahleinrichtung 2 rotieren zu lassen, dass ein rechtwinklig zur Rotationsachse 11 aus dem Kopf 17 austretender Laserstrahl 3 in einer Rotationsebene senkrecht zur Rotationsachse 11 rotiert.

Zur Erzeugung des Laserstrahles 3 besitzt die Laserstrahleinrichtung 2 einen Laser 15, bei dem es sich um einen Halbleiterlaser handeln kann. Dieser ist ortsfest am Gehäuse 1 befestigt und erzeugt einen Laserstrahl 16, der über einen Lichtwellenleiter 64 zu einer Emissionsfläche 15 geleitet wird. Daraus tritt ein koaxial zur Rotationsachse ausgerichteter Laserstrahl 16, der durch das Drehlager 38 hindurch geht und in ein dem Kopf 17 zugeordnetes Pentaprisma 18 eintritt, in dem der Laserstrahl 16 bzw. ein Teil des Laserstrahles 16 durch eine Mehrfachreflektion um 90° umgelenkt wird. Zur Feinjustage der Rechtwinkligkeit des Laserstrahles 3 zum Laserstrahl 16 ist eine Keilplatte 32 vorgesehen.

Ein anderer Teil des Laserstrahles 16 tritt im Wesentlichen geradlinig durch das Pentaprisma 18 hindurch. Brechungseffekte werden durch ein Ausgleichsprisma 31 derart kompensiert, dass sich ein axialer Laserstrahl 12 parallel zur Rotationsachse 11 und bevorzugt in der Rotationsachse 11 ausbreitet. Der axiale Laserstrahl 12 wird derart ausgerichtet, dass er möglichst senkrecht zur Rotationsebene des rotierenden Laserstrahls 3 verläuft.

An der Laserstrahleinrichtung 2 befindet sich ein erstes Nivellierungsmittel 4, bei dem es sich um eine Libelle handelt, die ein elektrisches Signal abgibt, welches sich ändert, wenn die Neigungslage 4 der Libelle geändert wird. Mit der Libelle 4 lässt sich die Neigung der Laserstrahleinrichtung 2 um die x-Richtung ermitteln. Mit einem zweiten Nivellierungsmittel 5, welches ebenfalls von einer Libelle gebildet ist, lässt sich die Neigungslage der Laserstrahleinrichtung 2 gegenüber der Y-Achse ermitteln.

Es ist eine Steuereinrichtung 9 vorgesehen, bei der es sich um einen Mikrocontroller handeln kann, der auf einer Leiterplatte 35 sitzt. Mittels der ersten Nivellierungsmittel 4, 5 gewinnt die Steuereinrichtung 9 Informationen über die Neigungsstellung der Laserstrahleinrichtung 2 und insbesondere über die Winkelstellung der Rotationsachse 11 gegenüber einer Vertikalachse. Mittels der Stellmotoren 6, 7 ist die Steuereinrichtung 9 in der Lage, die Laserstrahleinrichtung 2 derart zu justieren, dass die Rotationsachse 11 bzw. die Richtung des axialen Laserstrahls 12 in Richtung einer Vertikalen verläuft.

Die vorstehenden Ausführungen dienen der Erläuterung der von der Anmeldung insgesamt erfassten Erfindung. Der volle Schutzumfang der Erfindung ist jedoch nur durch die nachfolgenden Ansprüche definiert.

### Liste der Bezugszeichen

| | | | |
|---|---|---|---|
| 1 | Rotationslaser | 23 | Auftreffpunkt |
| 2 | Laserstrahleinrichtung | 25 | Maschinenteil |
| 3 | rotierender Laserstrahl | 26 | Maschinenteil |
| 3' | Rotationsebene | 48 | Bezugsebene |
| 4 | Libelle | 120 | Messempfänger |
| 5 | Libelle | 122 | Messfeld |
| 6 | Stellmotor | 123 | Lichtpunkt |
| 7 | Stellmotor | | |
| 8 | Fuß | | |
| 9 | Steuereinrichtung | | |
| 10 | Drehachse | | |
| 11 | Rotationsachse | | |
| 12 | axialer Laserstrahl | | |
| 13 | Libelle | | |
| 14 | Nivellierungsmittel | | |
| 15 | Laser | | |
| 16 | Laserstrahl | | |
| 17 | Umlenkorgan | a | axialer Abstand |
| 18 | Pentaprisma | b | radialer Abstand |
| 19 | Rotationsanteil | c₁-c₂ | Vertikalposition |
| 20 | Messempfänger | L | Pulslänge |
| 20' | Messempfänger | P₁-_{P4} | Pulsfolge |
| 20" | Messempfänger | (ϕ₁-ϕ₄ | Phasenwinkel |
| 21 | Fuß | | |
| 22 | Messfeld | | |

## Patentansprüche

1. **Rotationslaser (1)** mit einem als Umlenkorgan (17) ausgebildeten Kopf, mit einer Steuereinrichtung (9) und mit einer Lasereinrichtung (2),
wobei die Lasereinrichtung (2) zur Erzeugung eines von der Steuereinrichtung (9) mit einer Pulsfrequenz gepulsten Laserstrahls (16) eingerichtet ist, wobei das Umlenkorgan (17) so angeordnet ist, dass der Laserstrahl (16) als Pulsfolge (P₁, P₂, P₃, P₄) aus dem um eine Rotationsachse (4) rotierenden Umlenkorgan (17) teilweise von dem Umlenkorgan (17) von einer Richtung parallel zur Rotationsachse (11) in eine senkrecht zur Rotationsachse (11) verlaufende Rotationsebene (3') umgelenkt als rotierender Laserstrahl (3) und teilweise als parallel zur Rotationsachse (11) gerichteter axialer Laserstrahl (12) austritt so dass der axiale Laserstrahl (12) im Wesentlichen ohne Umlenkung in axialer Richtung aus dem Kopf des Rotationslasers (1) austreten kann, wobei die Steuereinrichtung (9) so eingerichtet ist, dass die Pulsfolge (P₁, P₂, P₃, P₄) mehrfach in einer Sekunde um voneinander verschiedene Phasenwinkel (ϕ₁, ϕ₂, ϕ₃, ϕ₄), die zwischen 0 π und 2 π liegen, phasenverschoben wird.

2. Verfahren zur Bestimmung der Rechtwinkligkeit eines Maschinenteiles (25) gegenüber einer Bezugsebene (48) mit den folgenden Schritten:
- Anordnung eines Rotationslasers (1) gemäß Anspruch 1 ortsfest zur Bezugsebene (48);
- Anordnung mehrerer Messempfänger (20, 20', 20") ortsfest zur Bezugsebene (48);
- Ausrichten der Rotationsebene (3') parallel zur Bezugsebene (48) mittels des auf die Messempfänger (20, 20', 20") auftreffenden rotierenden Laserstrahls (3);
- Verwenden eines weiteren Messempfängers (120) in verschiedenen Abständen (a) zur Bezugsebene (48) zur Bestimmung der jeweiligen Lage des Maschinenteiles (25, 26) gegenüber der Rotationsachse (11) des axialen Laserstrahls (12) in jeweils einer Parallelebene zur Bezugsebene (48);
- Erzeugen einer Pulsfolge (P₁, P₂, P₃, P₄) von Laserstrahlpulsen;
- Verschieben der Pulsfolge (P₁, P₂, P₃, P₄) mehrfach in der Sekunde um einen Phasenwinkel (ϕ₁, ϕ₂, ϕ₃), der zwischen 0 π und 2 π liegt;
- Simultanes Erfassen der Lage des rotierenden Laserstrahls (3) und der Lage des axialen Laserstrahls (12) mit den Messempfängern (20, 20', 20", 120).

3. Verfahren zur Bestimmung der Bewegung eines Maschinenteiles (26) gegenüber einer Bezugsebene (48) mit den folgenden Schritten:
- Anordnung eines Rotationslasers (1) gemäß Anspruch 1 ortsfest zur Bezugsebene (48);
- Anordnung mehrerer Messempfänger (20, 20', 20") ortsfest zur Bezugsebene (48);
- Ausrichten der Rotationsebene (3') parallel zur Bezugsebene (48) mittels des auf die Messempfänger (20, 20', 20") auftreffenden rotierenden Laserstrahls (3);
- Verwenden eines weiteren Messempfängers (120) in verschiedenen Abständen (a) zur Bezugsebene (48) zur Bestimmung der jeweiligen Lage des Maschinenteiles (25, 26) gegenüber der Rotationsachse (11) des axialen Laserstrahls (12) in jeweils einer Parallelebene zur Bezugsebene (48);
- Erzeugen einer Pulsfolge (P₁, P₂, P₃, P₄) von Laserstrahlpulsen;
- Verschieben der Pulsfolge (P₁, P₂, P₃, P₄) mehrfach in der Sekunde um einen Phasenwinkel (ϕ₁, ϕ₂, ϕ₃), der zwischen 0 π und 2 π liegt;
- Simultanes Erfassen der Lage des rotierenden Laserstrahls (3) und der Lage des axialen Laserstrahls (12) mit den Messempfängern (20, 20', 20", 120).

4. Vorrichtung nach Anspruch 1, **gekennzeichnet durch** einen senkrecht zur Bezugsebene (48) verlagerbaren Messempfänger (120), der in der Lage ist, aus einem auf einer Sensorfläche (122) des Messempfängers (120) auf einer Kreis- oder Ellipsenbahn mit geringem Abstand um die Rotationsachse (11) kreisenden, pulsierenden Lichtpunkt (123) den Flächenmittelpunkt der Kreis- oder Ellipsenbahn zu bestimmen.

5. Vorrichtung nach Anspruch 1 oder 4, **dadurch gekennzeichnet, dass** die Pulsfrequenz mindestens 10 mal, mindestens 50 mal oder mindestens 100 mal so hoch ist wie die Anzahl der Phasenverschiebungen pro Sekunde.

6. Vorrichtung nach Anspruch 1, 4 oder 5, **dadurch gekennzeichnet, dass** die phasenverschobenen Pulsfolgen (P₁, P₂, P₃, P₄) jeweils die gleiche zeitliche Pulslänge (L) besitzen.

7. Vorrichtung nach Anspruch 1, 4 ,5 oder 6, **dadurch gekennzeichnet, dass** der Betrag der Phasenverschiebung (ϕ₁, ϕ₂, ϕ₃) von einem Zufallsgenerator vorgegeben wird.

8. Vorrichtung nach Anspruch 1, 4, 5, 6 oder 7, **gekennzeichnet durch** mehrere Messempfänger (20, 20', 20"), die ortsfest zur Bezugsebene (48) angeordnet werden können und mittels derer die Steuereinrichtung (9) der Lasereinrichtung (2) mittels Stellmotoren (6, 7) kontinuierlich regelnd die Rotationsebene (3') parallel zur Bezugsebene (48) hält.

9. Verfahren nach Anspruch 2 oder 3, **dadurch gekennzeichnet, dass** der senkrecht zur Bezugsebene (48) verlagerbare Messempfänger (120) aus einem auf einer Sensorfläche (122) des Messempfängers auf einer Kreis- oder Ellipsenbahn mit geringem Abstand um die Rotationsachse (11) kreisenden, pulsierenden Lichtpunkt (123) den Flächenmittelpunkt der Kreis- oder Ellipsenbahn bestimmt.

10. Verfahren nach einem der Ansprüche 2, 3 oder 9, **dadurch gekennzeichnet, dass** die Pulsfrequenz mindestens 10 mal, mindestens 50 mal oder mindestens 100 mal so hoch ist wie die Anzahl der Phasenverschiebungen pro Sekunde.

11. Verfahren nach einem der Ansprüche 2, 3, 9 oder 10, **dadurch gekennzeichnet, dass** die phasenverschobenen Pulsfolgen (P₁, P₂, P₃, P₄) jeweils die gleiche zeitliche Pulslänge (L) besitzen.

12. Verfahren nach einem der Ansprüche 2, 3, 9,10 oder 11, **dadurch gekennzeichnet, dass** der Betrag der Phasenverschiebung (ϕ₁, ϕ₂, ϕ₃) eine Zufallszahl ist.

13. Verfahren nach einem der Ansprüche 2, 3, 9,10,11 oder 12, **dadurch gekennzeichnet, dass** die Steuereinrichtung (9) der Lasereinrichtung (2) mittels Stellmotoren (6, 7) kontinuierlich regelnd die Rotationsebene (3') parallel zur Bezugsebene (48) hält.

## Claims

1. Rotary laser (1) comprising a head in the form of a deflection element (17), and comprising a control device (9) and a laser device (2),
wherein the laser device (2) is designed to generate a laser beam (16) pulsed at a pulse frequency by the control device (9),
wherein the deflection element (17) is arranged such that the laser beam (16), as a pulse sequence (P₁, P₂, P₃, P₄) from the deflection element (17) rotating about an axis of rotation (4), is deflected in part by the deflection element (17) from a direction parallel to the axis of rotation (11) into a plane of rotation (3') extending perpendicularly to the axis of rotation (11) as a rotating laser beam (3) and emerges in part as an axial laser beam (12) directed in parallel with the axis of rotation (11) such that the axial laser beam (12) can emerge from the head of the rotary laser (1) substantially without deflection in the axial direction, wherein the control device (9) is designed such that the pulse sequence (P₁, P₂, P₃, P₄) is phase shifted several times in one second by phase angles (ϕ₁, ϕ₂, ϕ₃, ϕ₄) that are different from one another and are between 0 Π and 2 Π.

2. Method for determining the perpendicularity of a machine part (25) with respect to a reference plane (48), comprising the following steps:
- arranging a rotary laser (1) according to claim 1 so as to be fixed with respect to the reference plane (48);
- arranging a plurality of measuring receivers (20, 20', 20") so as to be fixed with respect to the reference plane (48);
- aligning the plane of rotation (3') in parallel with the reference plane (48) by means of the rotating laser beam (3) incident on the measuring receivers (20, 20', 20");
- using a further measuring receiver (120) at different distances (a) from the reference plane (48) to determine the relevant position of the machine part (25, 26) relative to the axis of rotation (11) of the axial laser beam (12) in a plane parallel to the reference plane (48) in each case;
- generating a pulse sequence (P₁, P₂, P₃, P₄) of laser beam pulses;
- shifting the pulse sequence (P₁, P₂, P₃, P₄) several times per second by a phase angle (ϕ₁, ϕ₂, ϕ₃) which is between 0 π and 2 π; and
- simultaneously detecting the position of the rotating laser beam (3) and the position of the axial laser beam (12) using the measuring receivers (20, 20', 20", 120).

3. Method for determining the movement of a machine part (26) with respect to a reference plane (48), comprising the following steps:
- arranging a rotary laser (1) according to claim 1 so as to be fixed with respect to the reference plane (48);
- arranging a plurality of measuring receivers (20, 20', 20") so as to be fixed with respect to the reference plane (48);
- aligning the plane of rotation (3') in parallel with the reference plane (48) by means of the rotating laser beam (3) incident on the measuring receivers (20, 20', 20");
- using a further measuring receiver (120) at different distances (a) from the reference plane (48) to determine the relevant position of the machine part (25, 26) relative to the axis of rotation (11) of the axial laser beam (12) in a plane parallel to the reference plane (48) in each case;
- generating a pulse sequence (P₁, P₂, P₃, P₄) of laser beam pulses;
- shifting the pulse sequence (P₁, P₂, P₃, P₄) several times per second by a phase angle (ϕ₁, ϕ₂, ϕ₃) which is between 0 π and 2 π; and
- simultaneously detecting the position of the rotating laser beam (3) and the position of the axial laser beam (12) using the measuring receivers (20, 20', 20", 120).

4. Device according to claim 1, **characterised by** a measuring receiver (120) which can be moved perpendicularly to the reference plane (48) and which is capable of determining, from a pulsating light point (123) revolving around the axis of rotation (11) at a small distance on a circular or elliptical path on a sensor surface (122) of the measuring receiver (120), the centre of area of the circular or elliptical path.

5. Device according to claim 1 or 4, **characterised in that** the pulse frequency is at least 10 times, at least 50 times or at least 100 times as high as the number of phase shifts per second.

6. Device according to claim 1, 4 or 5, **characterised in that** the phase-shifted pulse sequences (P₁, P₂, P₃, P₄) each have the same temporal pulse length (L).

7. Device according to claim 1, 4, 5 or 6, **characterised in that** the amount of the phase shift (ϕ₁, ϕ₂, ϕ₃) is specified by a random generator.

8. Device according to claim 1, 4, 5, 6 or 7, **characterised by** a plurality of measuring receivers (20, 20', 20") which can be arranged in a fixed manner relative to the reference plane (48) and by means of which the control device (9) of the laser device (2) keeps the plane of rotation (3') parallel to the reference plane (48) in a continuously regulating manner by means of servomotors (6, 7).

9. Method according to either claim 2 or claim 3, **characterised in that** the measuring receiver (120) which can be moved perpendicularly to the reference plane (48) determines, from a pulsating light point (123) revolving around the axis of rotation (11) at a small distance on a circular or elliptical path on a sensor surface (122) of the measuring receiver, the centre of area of the circular or elliptical path.

10. Method according to any of claims 2, 3 or 9, **characterised in that** the pulse frequency is at least 10 times, at least 50 times or at least 100 times as high as the number of phase shifts per second.

11. Method according to any of claims 2, 3, 9 or 10, **characterised in that** the phase-shifted pulse sequences (P₁, P₂, P₃, P₄) each have the same temporal pulse length (L).

12. Method according to any of claims 2, 3, 9, 10 or 11, **characterised in that** the amount of the phase shift (ϕ₁, ϕ₂, ϕ₃) is a random number.

13. Method according to any of claims 2, 3, 9, 10, 11 or 12, **characterised in that** the control device (9) of the laser device (2) keeps the plane of rotation (3') parallel to the reference plane (48) in a continuously regulating manner by means of servomotors (6, 7).

## Revendications

1. Laser rotatif (1) avec une tête réalisée sous la forme d'un organe de déviation (17), avec un dispositif de commande (9) et avec un dispositif laser (2), dans lequel le dispositif laser (2) est conçu pour générer un faisceau laser (16) pulsé à une fréquence d'impulsion par le dispositif de commande (9), dans lequel l'organe de déviation (17) est agencé de manière que le faisceau laser (16) sorte sous la forme d'une séquence d'impulsions (P₁, P₂, P₃, P₄) de l'organe de déviation (17) tournant autour d'un axe de rotation (4), en étant pour partie dévié par l'organe de déviation (17) d'une direction parallèle à l'axe de rotation (11) dans un plan de rotation (3') s'étendant perpendiculairement à l'axe de rotation (11) en tant que faisceau laser rotatif (3) et en étant pour partie dirigé parallèlement à l'axe de rotation (11) en tant que faisceau laser axial (12) de sorte que le faisceau laser axial (12) peut sortir de la tête du laser rotatif (1) sensiblement sans déviation dans la direction axiale, dans lequel le dispositif de commande (9) est réglé de manière que la séquence d'impulsions (P₁, P₂, P₃, P₄) soit déphasée plusieurs fois dans une seconde par des angles de phase (ϕ₁, ϕ₂, ϕ₃, ϕ₄) différents les uns des autres et compris entre 0 π et 2 π.

2. Procédé pour déterminer la perpendicularité d'une partie de machine (25) 15 par rapport à un plan de référence (48), comprenant les étapes suivantes :
- agencement fixe d'un laser rotatif (1) selon la revendication 1 par rapport au plan de référence (48) ;
- agencement fixe d'une pluralité de récepteurs de mesure (20, 20', 20") par rapport au plan de référence (48) ;
- orienter le plan de rotation (3') parallèlement au plan de référence (48) au moyen du faisceau laser rotatif (3) frappant les récepteurs de mesure (20, 20', 20") ;
- utiliser un autre récepteur de mesure (120) à différentes distances (a) du plan de référence (48) pour déterminer la position respective de la partie de machine (25, 26) par rapport à l'axe de rotation (11) du rayon laser axial (12) à chaque fois dans un plan parallèle au plan de référence (48) ;
- générer une séquence d'impulsions (P₁, P₂, P₃, P₄) d'impulsions de faisceau laser ;
- décaler la séquence d'impulsions (P₁, P₂, P₃, P₄) plusieurs fois par seconde d'un angle de phase (ϕ₁, ϕ₂, ϕ₃) qui se situe entre 0 π et 2 π ;
- détecter de manière simultanée la position du faisceau laser rotatif (3) et la position du faisceau laser axial (12) avec les récepteurs de mesure (20, 20', 20", 120) .

3. Procédé pour déterminer le mouvement d'une partie de machine (26) par rapport à un plan de référence (48), comprenant les étapes suivantes :
- agencement fixe d'un laser rotatif (1) selon la revendication 1 par rapport au plan de référence (48) ;
- agencement fixe de plusieurs récepteurs de mesure (20, 20', 20") par rapport au plan de référence (48) ;
- orienter le plan de rotation (3') parallèlement au plan de référence (48) au moyen du faisceau laser rotatif (3) frappant les récepteurs de mesure (20, 20', 20") ;
- utiliser un autre récepteur de mesure (120) à différentes distances (a) du plan de référence (48) pour déterminer la position respective de la partie de machine (25, 26) par rapport à l'axe de rotation (11) du rayon laser axial (12) à chaque fois dans un plan parallèle au plan de référence (48) ;
- générer une séquence d'impulsions (P₁, P₂, P₃, P₄) d'impulsions de faisceau laser ;
- décaler la séquence d'impulsions (P₁, P₂, P₃, P₄) plusieurs fois par seconde d'un angle de phase (ϕ₁, ϕ₂, ϕ₃) qui se situe entre 0 π et 2 π ;
- détecter de manière simultanée la position du faisceau laser rotatif (3) et la position du faisceau laser axial (12) avec les récepteurs de mesure (20, 20', 20", 120) .

4. Dispositif selon la revendication 1, **caractérisé par** un récepteur de mesure (120) qui est déplaçable perpendiculairement au plan de référence (48) et qui est capable à partir d'un point lumineux pulsé (123) tournant à une faible distance autour de l'axe de rotation (11) sur une trajectoire circulaire ou elliptique sur une surface de détection (122) du récepteur de mesure (120), de déterminer le point central de la surface de la trajectoire circulaire ou elliptique.

5. Dispositif selon la revendication 1 ou 4, **caractérisé en ce que** la fréquence d'impulsion est au moins 10 fois, au moins 50 fois ou au moins 100 fois plus élevée que le nombre de déphasages par seconde.

6. Dispositif selon la revendication 1, 4 ou 5, **caractérisé en ce que** les séquences d'impulsions déphasées (P₁, P₂, P₃, P₄) ont chacune la même longueur temporelle d'impulsion (L) .

7. Dispositif selon la revendication 1, 4, 5 ou 6, **caractérisé en ce que** la valeur du déphasage (ϕ₁, ϕ₂, ϕ₃) est prédéterminée par un générateur aléatoire.

8. Dispositif selon la revendication 1, 4, 5, 6 ou 7, **caractérisé par** plusieurs récepteurs de mesure (20, 20', 20") qui peuvent être agencés de manière fixe par rapport au plan de référence (48) et au moyen desquels le dispositif de commande (9) du dispositif laser (2) maintient le plan de rotation (3') parallèle au plan de référence (48) par régulation en continu au moyen de servomoteurs (6, 7).

9. Procédé selon la revendication 2 ou 3, **caractérisé en ce que**, à partir d'un point lumineux pulsé (123) qui tourne à une faible distance autour de l'axe de rotation (11) sur une trajectoire circulaire ou elliptique sur une surface de détection (122) du récepteur de mesure, le récepteur de mesure (120), qui peut être déplacé perpendiculairement au plan de référence (48), détermine le point central de surface de la trajectoire circulaire ou elliptique.

10. Procédé selon l'une des revendications 2, 3 ou 9, **caractérisé en ce que** la fréquence d'impulsion est au moins 10 fois, au moins 50 fois ou au moins 100 fois plus élevée que le nombre de déphasages par seconde.

11. Procédé selon l'une des revendications 2, 3, 9 ou 10, **caractérisé en ce que** les séquences d'impulsions déphasées (P₁, P₂, P₃, P₄) ont chacune la même longueur temporelle d'impulsion (L).

12. Procédé selon l'une des revendications 2, 3, 9, 10 ou 11, **caractérisé en ce que** la grandeur du déphasage (ϕ₁, ϕ₂, ϕ₃) est un nombre aléatoire.

13. Procédé selon l'une des revendications 2, 3, 9, 10, 11 ou 12, **caractérisé en ce que** le dispositif de commande (9) du dispositif laser (2) maintient le plan de rotation (3') parallèle au plan de référence (48) par régulation en continu au moyen de servomoteurs (6, 7).
